**Europäisches Patentamt**

**European Patent Office**

**Office européen des brevets**

(19)

(11) Publication number: **0 041 829**
A2

# (12) EUROPEAN PATENT APPLICATION

(21) Application number: **81302473.4**

(22) Date of filing: **03.06.81**

(51) Int. Cl.³: **H 02 P 5/16**
**H 02 K 23/04**

(30) Priority: **10.06.80 GB 8018886**
**23.09.80 GB 8030607**

(43) Date of publication of application:
**16.12.81 Bulletin 81/50**

(84) Designated Contracting States:
**DE FR GB IT NL**

(71) Applicant: THORN DOMESTIC APPLIANCES
(ELECTRICAL) LIMITED
Thorn House Upper St. Martin's Lane
London WC2H 9ED(GB)

(72) Inventor: Newton, Stephen John
92. Lion Lane
Shottermill Haslemere Surrey(GB)

(72) Inventor: Bates, Douglas Henry
9, Guildford Close
Southbourne Emsworth Hampshire(GB)

(72) Inventor: Czapran, Zygmunt Stanislaw
Idaho School Road
Bursleden Hampshire(GB)

(74) Representative: Marsh, Robin Geoffrey et al,
THORN EMI PATENTS LIMITED Blyth Road
Hayes Middlesex, UB3 1BP(GB)

(54) Motor speed control system.

(57) A motor speed control system for electrically operated domestic appliances, for example food mixers, includes, as the prime mover, a D.C. permanent-magnet motor in which the permanent magnet material is a magnetic ceramic, such as barium ferrite. Associated with the motor is a speed control circuit which incorporates components that limit the maximum current supplied to the motor to a level that is not sufficient to demagnetise the ceramic magnet material.

EP 0 041 829 A2

Croydon Printing Company Ltd.

: 1 :

"MOTOR SPEED CONTROL SYSTEM"

The present invention relates to a motor speed control system.

In domestic appliances such as, for example, food mixers, where a variable speed rotary drive is required, it has been conventional to use a series-wound A.C. induction motor. One of the major disadvantages of this type of motor as used in domestic appliances is that it tends to be very noisy. In order to produce the required output, a series wound motor for use in a food mixer may be required to have a maximum speed of rotation of about 14,000 rpm and this of itself makes the motor and the gear train which it drives very noisy. The necessity for a cooling fan and the construction of the series wound A.C. motor further increases the noise output.

We have now found that a significant reduction in the noise from a food mixer can be achieved by replacing the conventional series-wound A.C. motor with a D.C. permanent-magnet motor, in which the permanent magnet material is a magnetic ceramic, e.g. barium ferrite. This has been found to produce a noise reduction of up to 20 dB. Because of the use of the ceramic magnets, a similar torque can be produced with a motor of small overall construction and furthermore an equivalent power output can be achieved with a ceramic-magnet motor running at about half the speed of a series-wound A.C. motor.

According to the present invention, there is provided a motor speed control system for a domestic appliance, the system including an electric motor, a user-operable device for setting a desired speed of operation for said motor, and a control arrangement for sensing said setting and controlling the motor to operate at said desired speed, wherein the motor is a D.C. permanent magnet motor in which the permanent magnet material is a magnetic ceramic. Preferably a tachometer is associated with the motor to detect its speed of rotation and the control circuit is arranged to control the motor speed, in a closed loop fashion, in dependence upon the output of the tachometer and the setting of the user control. A further reduction in noise may be achieved, if desired, by omitting the fan, since, unlike the conventional series-wound A.C. motor, a cooling fan is not essential for ceramic-magnet D.C. motors when used in domestic appliances such as food mixers.

A major problem relating to ceramic-magnet motors is that of demagnetisation of the magnets, which can occur if the armature current exceeds a predetermined value. This is possible under certain transient conditions, such as where there is a sudden increase in the set speed. With a speed control circuit of the phase-control kind, this will lead to a sudden advance in the turn-on point of the motor control triac. The armature current is dependent upon the difference between the applied voltage and the motor back EMF and, as the latter is dependent upon the motor speed, which can itself only change relatively slowly because of the inertia of the armature, a sudden increase in the set speed may produce a large armature current, which may be sufficient, in some cases, to demagnetise the magnets.

It is another object of the present invention to seek to avoid the above problem by limiting the rate, with respect to time, at which the conduction angle can increase.

Thus according to a further aspect of the present invention there is provided a motor speed control system comprising a D.C. electric motor having ceramic magnets and a control circuit for setting the speed of the motor in dependence upon the setting of a user-operable control, the control circuit being arranged to carry out phase control of the energization of the motor, with the rate of advance of the phase control firing point being limited to a value low enough to ensure that an armature current sufficient to demagnetise the magnets cannot occur in practice. Preferably the rate of advance of the firing point is limited to, for example, 1% per cycle of the maximum conduction angle available. This may be done by suitable choice of the time constants associated with the control circuit and will provide so-called "soft start" for the motor. In the case of closed loop control using a tachometer, the time constants used to limit the rate of firing angle advance may be either those associated with the sources of the set point signals, i.e. the tachometer and a user-operable control element such as a potentiometer, or with the forward electrical path of the control circuitry, i.e. the loop gain of the system.

Previous efforts to resist demagnetisation have placed emphasis on making the ceramic magnet material resistant to demagnetisation. In accordance with said further aspect of the present invention, however, it is preferred to use this current limiting feature to avoid demagnetisation.

Electromagnetic braking may be employed to decelerate the motor armature when the motor is to be stopped. This can be achieved by shunting the motor with a resistor of low resistance, and a switch ganged to the user control can be connected across the motor to shunt it with such a resistor for this purpose.

Though the motor speed control system described herein is described with reference to its application to a domestic food mixer, it will be appreciated that it can be incorporated in a variety of other domestic appliances such as, for example, food processors such as the motorised bases which accept liquidiser and other attachments, vacuum cleaners, tumble dryers, washing machines and dishwashers.

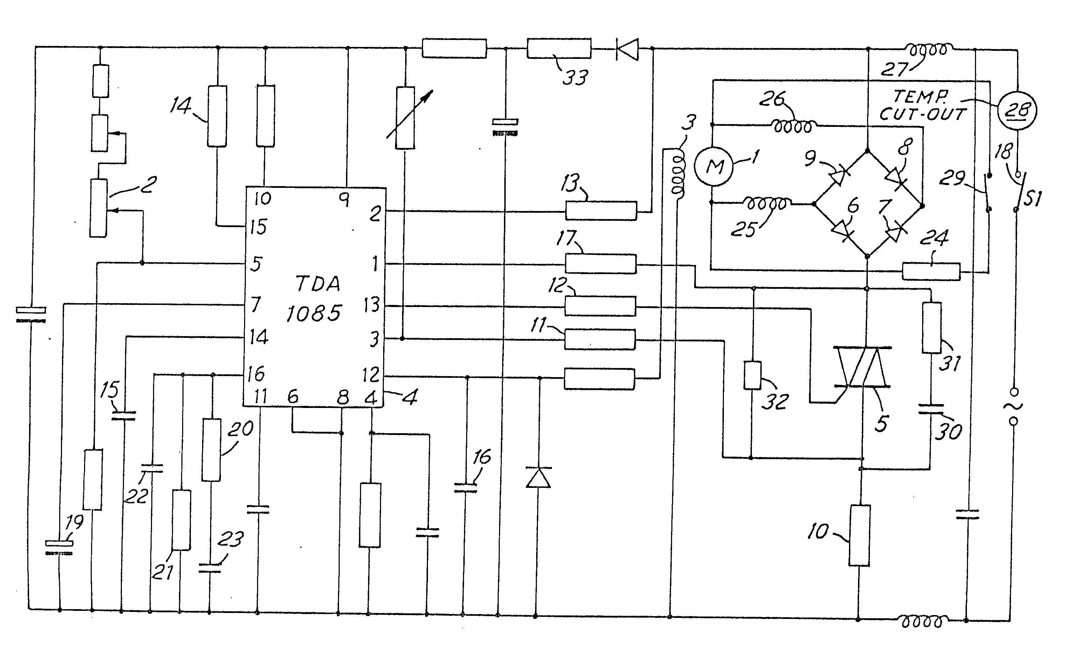

The invention will be further described by way of example with reference to the accompanying drawing in which the sole Figure is a circuit diagram of one embodiment of the present invention.

In the Figure, a motor 1 constitutes the drive motor of a food mixer which, apart from the circuit arrangement shown in the figure, is of conventional construction. Associated with motor 1 are circuit components to control its speed in a closed loop fashion in dependence upon the setting of a user-operable control, namely a potentiometer 2, and the output of a tachometer arrangement comprising an eight pole annular magnet (not shown) fixed to one end of a shaft of the motor 1 and a pickup coil 3 mounted adjacent the path of the eight magnetic poles. The control is effected by means of an integrated circuit 4 of the type designated TDA1085 made by Motorola Inc. The functions, features and operation of this integrated circuit are well known and will not, therefore, be described in detail here. Broadly the integrated circuit 4 derives signals from potentiometer 2 and pickup coil 3 and delivers appropriate gating signals to a triac 5 which controls the current to the motor 1 in a phase control manner. As the ceramic magnet motor 1 is a DC motor and is to be energised from the AC mains supply, it is disposed within a full wave bridge, comprising diodes 6, 7, 8, and 9, which is connected in series with the triac 5. In series between the triac 5 and the neutral rail of the motor speed control system is a resistor 10 across which a voltage is developed proportional to the triac current. The voltage across this resistor 10 is monitored, via resistor 11, by pin 3 of the integrated circuit 4 which is arranged to provide a current limiting function with respect to the motor armature current. When the instantaneous current amplitude in one half cycle exceeds a predetermined value, the integrated circuit 4 operates so that the gating pulses in the next and subsequent half cycles are progressively retarded until the current limit is no longer exceeded. In conventional use of the current limiting function of the integrated circuit 4, the current limit is set at a value which is intended primarily to protect the triac. In the present system, however, it is set at a value which is in excess of that required by motor 1 for maximum load and which is of a value such as to ensure that the current is not sufficiently high as to de-magnetise the ceramic magnets of the motor.

The integrated circuit 4 controls the operation of triac 5 in the phase control mode. For this purpose, the mains supply waveform is monitored via a resistor 13 by pin 2 of the integrated circuit, this pin being connected internally of the integrated circuit to the functional equivalent of a zero crossing detector. This provides a timing reference at the start of each half cycle of the mains supply waveform. Resistor 14 and capacitor 15 define the time constant of a ramp generator within the integrated circuit 5, this ramp being used for comparison with a control voltage to determine the timing of the gating pulses delivered from pin 13. This ramp generator is, of course, synchronised with the mains supply waveform as detected by pin 2.

The pickup coil 3 is connected to pin 12 of the integrated circuit 4; a capacitor 16 is connected between pin 12 and the neutral rail of the system. As shown in the Figure, the integrated circuit 4 is so connected that the pickup coil 3 acts as a digital tachometer pickup coil, the output of this coil being converted by a frequency-to-voltage circuit within integrated circuit 4 to a DC level which is internally compared with the output of the ramp generator.

The motor 1 presents an inductive load and the current through it will therefore lag the applied voltage. This means that it is important to ensure that the gating pulse applied to the triac 5 arrives at the triac gate after the anode-to-cathode current falls to zero. To enable this to be achieved, the voltage across the combination of triac 5 and current sensing resistor 10 is monitored, via a resistor 17, by pin 1 of integrated circuit 4. This voltage is, of course, proportional to the current through triac 5. In this way, the pulse timing logic within the integrated circuit 4 ensures that the gating pulse is not applied until the current through the triac 5 has dropped to a sufficiently low value.

Smooth starting of the motor 1 is provided by a "soft start" facility. That is to say, when the motor is first turned on by closure of a switch 18 ganged with the control 2, the conduction angle is gradually increased from zero to a value appropriate to the set speed of the motor. The time period of soft start is defined by a capacitor 19 connected to pin 7 of integrated circuit 4 and may, for example, be between 1 and 3 seconds. This feature ensures that a large in-rush current into the motor on starting, and hence possible demagnetisation of the ceramic magnets, is avoided.

Resistors 20 and 21 and capacitors 22 and 23 define the loop gain of the motor speed control system and their values may, of course, be chosen to suit desired control characteristics of the system. For smoothest operation, it is preferred that the components be appropriately chosen so that the speed control system is critically damped. In any event, the loop characteristics, as defined by resistors 20 and 21 and capacitors 22 and 23, are chosen to limit the rate of advance of the triac firing angle to somewhat less than 1% per cycle of the maximum conduction angle. As explained above, this is to avoid armature currents occurring under transient conditions which are large enough to cause demagnetisation.

Inductors 25, 26 and 27 have low values of inductance to prevent interference generated by the motor from being injected back into the mains supply.

A temperature cut-out 28 associated with the motor is arranged to go open circuit in the event that the motor overheats.

A switch contact 29 is also ganged with the switch 18 so that when the potentiometer 2 is set to the off position the contact 29, which has previously been open, is closed. This places a resistor 24 across the motor 1 and prevents it from running on for some time after the switch 18 has been opened as might otherwise occur in view of the relatively high moment of inertia of the armature of the motor 1.

Capacitor 30 and resistor 31 constitute a protection network for the triac. The voltage dependent resistor 32 is also provided to protect the triac against voltage transients.

Numerous modifications of the above described circuit will be apparent to those skilled in the art. For example, the tachometer 3 could operate in the analog, rather than digital, mode. The triac 5 could be replaced by any other appropriate controlled conduction element or elements. Equally, the mechanically operated switch 29 could be replaced by an electronic switch, for example, a controlled conduction element.

The mains dropping resistor 33 for supplying the integrated circuit 4 may be replaced by a capacitor-diode network.

What we claim is:-

1.      A motor speed control system for a domestic appliance, the system including an electric motor, a user-operable device for setting a desired speed of operation for said motor, and a control system for sensing said setting and controlling the motor to operate at said desired speed, wherein the motor is a D.C. permanent magnet motor in which the permanent magnet material is a magnetic ceramic.

2.      A system according to claim 1 wherein said magnetic ceramic is barium ferrite.

3.      A system according to either of claims 1 or 2 including a tachometer device for sensing the speed of operation of said motor and wherein said control system includes circuits to compare electrical signals indicative of the sensed speed and of the sensed setting and to control, in response to said comparison, the electrical current supplied to the motor.

4.      A system according to any of claims 1-3 wherein the supply of said current to said motor is controlled by gating signals applied to a gating electrode of a triac device connected in the power supply line to said motor.

5.      A system according to any proceding claim including circuit means for limiting the electrical current supplied to said motor to a value which is not sufficiently high as to demagnetise the ceramic magnet material.

6.      A system according to claim 5 wherein said control system is arranged to effect phase control of the energisation of said motor and to limit the rate of advance of the phase control firing point so as to inhibit said demagnetisation.

7.      A system according to any preceding claim including braking means for applying electromagnetic braking to decelerate the armature of said motor.

8.      A system according to claim 7 wherein said braking means comprises a resistor and switchable means for switching said resistor across the motor when deceleration of the motor is to be effected.

9.      A system according to any preceding claim including a temperature cut-out device to disconnect the supply of electricity to said motor in the event that the temperature of said motor exceeds a threshold level.

10    A food mixer incorporating a motor speed control system according to any preceding claim.

0041829